# FASCICULE DE BREVET EUROPEEN

(11) **EP 0 917 268 B1**
(45) Date de publication et mention de la délivrance du brevet: **16.08.2001**
(21) Numéro de dépôt: 98402785.4
(22) Date de dépôt: 10.11.1998
(51) Int. Cl.: H02B 1/32

(54) **Montant pour châssis de support, notamment pour appareillage électrique**
Pfosten für Befestigungsgestell, insbesondere für Elektrische Geräte
Upright for support chassis, in particular for electrical apparatus

(30) Priorité: 12.11.1997 FR 9714155
(43) Date de publication de la demande: 19.05.1999
(73) Titulaire: LEGRAND, F-87000 Limoges (FR); LEGRAND SNC, F-87000 Limoges (FR)
(72) Inventeur: Combas, Christian, 87240 Ambazac (FR); Mazabraud, Pierre, 87500 Saint Yrieix La Perche (FR); Guelin, Jacques, 87000 Limoges (FR)
(74) Mandataire: CABINET BONNET-THIRION

(56) Documents cités:
- DE-A- 19 521 001
- DE-U- 9 416 322

## Description

La présente invention concerne d'une manière générale les châssis de support comportant, à la manière d'une échelle, deux montants et au moins une traverse, (voir DE 94 16 322 U).

Ces châssis de support sont destinés à recevoir, par leur(s) traverse(s), un quelconque appareillage, formé par exemple d'appareils électriques modulaires.

Les montants qu'ils comportent ont à ce jour pour fonction essentielle, d'une part, de recevoir la ou les traverses, et, d'autre part, de permettre la fixation de l'ensemble à un quelconque support.

S'agissant de la ou des traverses, ils comportent donc, chacun, au moins deux zones de fixation de traverse, qui sont établies à distance l'une de l'autre, et par chacune desquelles ils sont effectivement adaptés à recevoir une telle traverse, moyennant la mise en oeuvre de moyens d'assujettissement appropriés.

S'agissant de la fixation de l'ensemble à un quelconque support, ils comportent en outre, chacun, indépendamment des zones de fixation de traverse précédentes, et à distance de celles-ci, au moins deux autres zones de fixation, qui, en pratique, se présentent chacune sous la forme d'un simple trou, et par chacune desquelles ils sont effectivement aptes à être rapportés sur un tel support, moyennant également la mise en oeuvre de moyens d'assujettissement appropriés.

La présente invention a d'une manière générale pour objet une disposition permettant avantageusement à l'un au moins de ces montants, et, préférentiellement, à chacun de ceux-ci, d'assumer si désiré d'autres fonctions, en augmentant ainsi la capacité technique de l'ensemble.

De manière plus précise, elle a pour objet un montant pour châssis de support, notamment pour appareillage électrique, du genre comportant, à distance l'une de l'autre, au moins deux zones de fixation de traverse par chacune desquelles il est adapté à recevoir une traverse, comportant indépendamment des zones de fixation de traverse, et à distance de celles-ci, au moins un moyen de fixation du genre queue d'aronde apte à lui permettre de recevoir, frontalement, un quelconque autre équipement, ce montant étant caractérisé en ce qu'il comporte à cet effet, débouchant en creux sur sa tranche, à l'une au moins de ses extrémités, au moins une encoche en queue d'aronde.

Une telle encoche sera avantageusement ménagée sur le bord transversal et/ou sur le bord longitudinal extérieur de l'extrémité correspondante des montants.

Il est ainsi avantageusement possible d'associer si désiré au montant suivant l'invention un quelconque équipement, et, par exemple, une entretoise de jumelage permettant de le coupler avec un autre montant de même type disposé soit bout à bout avec lui, pour un jumelage vertical de deux châssis de support, soit côte à côte avec lui, pour un jumelage horizontal de ceux-ci.

A ce jour, les entretoises de jumelage mises en oeuvre pour un jumelage vertical ou horizontal de deux châssis de support nécessitent, pour leur mise en place, une intervention sur la face arrière de ces châssis de support, et, donc, plus précisément, sur la face arrière de leurs montants, au prix d'une dépose, au moins partielle, de ces montants.

La disposition suivant l'invention permet au contraire d'intervenir frontalement sur ces montants, sans une quelconque dépose de ceux-ci.

Il suffit, en effet, d'engager, de l'avant, sur les montants à coupler, à la faveur des encoches en queue d'aronde prévues à cet effet sur leur tranche, l'entretoise de jumelage à mettre en oeuvre.

L'opération de jumelage correspondante s'en trouve avantageusement simplifiée.

On connaît déjà, par le modèle d'utilité allemand DE 94 16 322 U, le jumelage vertical de deux châssis par assemblage du genre queue d'aronde, mais avec des encoches en queue d'aronde ménagées sur une pièce entretoise de jumelage pour coopération avec des bossages en queue d'aronde ménagées en saillie sur les faces terminales affrontées des châssis à assembler.

Un tel agencement n'a pu se prévaloir dans la pratique en raison de graves inconvénients consistant dans la complication de la fabrication des châssis, la fragilité des éléments en saillie et l'obstacle que constituent de tels éléments à la juxtaposition pure et simple de deux châssis.

Bien entendu, si désiré, les encoches en queue d'aronde peuvent avantageusement servir à assujettir localement au montant suivant l'invention, par simple engagement frontal sur celui-ci, un quelconque autre équipement qu'une entretoise de jumelage, et, par exemple, un pont de passage de câbles, une barrette de fixation de tubes, une plaque d'ajour, un cornet d'épanouissement ou autres.

Il est aussi avantageusement possible de juxtaposer des châssis sans utiliser d'entretoise de jumelage. En effet, l'absence de moyen de fixation en saillie sur le bord transversal des montants et/ou sur le bord longitudinal extérieur des montants permet aisément d'accoler sans jeu deux montants, favorisant ainsi la compacité de l'ensemble.

Suivant un deuxième aspect, le montant suivant l'invention comporte, également, à distance de sa tranche, sur un bossage d'emboîtement qui fait saillie sur sa face avant, et à titre de moyen de fixation, au moins un autre élément de queue d'aronde, cet élément de queue d'aronde étant par exemple également une encoche, qui, à compter de la face avant de ce bossage d'emboîtement, s'étend en creux sur une face latérale de celui-ci, sur une partie au moins de la hauteur de ce bossage d'emboîtement.

Grâce à un tel bossage d'emboîtement, le montant suivant l'invention peut avantageusement recevoir, localement, si désiré, un quelconque équipement, tel que, par exemple, un bornier, pourvu, bien entendu, que cet équipement soit pourvu à cet effet d'au moins un élément de queue d'aronde complémentaire du ou des siens.

Une encoche en queue d'aronde peut d'ailleurs recevoir par introductions successives des bossages queue d'aronde appartenant à deux ou davantage d'équipements. L'encoche en queue d'aronde pouvant avantageusement être traverssante, sa longueur n'est alors limitée que par l'épaisseur du montant dans la zone correspondante.

Suivant un troisième aspect, le montant suivant l'invention comporte, également, localement, en saillie sur sa face avant, à titre de moyen de fixation, au moins un rail d'encliquetage présentant, parallèlement à cette face avant, deux retours en équerre.

Ce rail d'encliquetage permet avantageusement de rapporter, localement, si désiré, sur le montant suivant l'invention, par simple engagement frontal sur celui-ci, un quelconque équipement, et, par exemple, comme précédemment, un bornier, pourvu, bien entendu, que cet équipement soit pourvu à cet effet de moyens d'encliquetage complémentaires.

En bref, le montant suivant l'invention présente, avantageusement, en attente, de multiples moyens de fixation permettant d'y assujettir, localement, toujours par engagement frontal, ce qui accroît avantageusement son champ fonctionnel en rendant particulièrement aisée et rapide la mise en place des équipements.

Les caractéristiques et avantages de l'invention ressortiront d'ailleurs de la description qui va suivre, à titre d'exemple, en référence aux dessins schématiques annexés sur lesquels :
la figure 1 est une vue élévation de face d'un châssis de support comportant deux montants suivant l'invention ;
la figure 2 est, à échelle supérieure, une vue partielle en perspective d'un de ces montants, vu de la droite ;
la figure 3 est une autre vue partielle en perspective de ce montant, vu de la gauche ;
la figure 4 reprend, à échelle supérieure, le détail de ce montant repéré par un encart IV sur la figure 1 ;
la figure 5 est, à la même échelle que la figure 4, une vue en coupe transversale de ce montant, suivant la ligne V-V de la figure 3 ;
la figure 6 est une vue en perspective d'une entretoise de jumelage associée, suivant l'invention, à un tel montant ;
la figure 7 est une vue partielle en élévation de face, qui, déduite de celle de la figure 4, mais à une échelle inférieure à celle de celle-ci, illustre la mise en oeuvre de cette entretoise de jumelage, suivant une première configuration de jumelage des châssis de support correspondants ;
la figure 8 est une vue partielle en élévation de face analogue à celle de la figure 7, pour une deuxième configuration de jumelage de ces châssis de support ;
les figures 9, 10, 11 sont des vues partielles en perspective se rapportant chacune respectivement à divers autres équipements susceptibles d'être assujettis localement à un montant suivant l'invention ;
la figure 12 reprend, à échelle supérieure, le détail de la figure 11 repéré par un encart XII sur cette figure 11 ;
la figure 13 est une vue partielle en perspective qui, reprenant pour partie celle de la figure 3, illustre l'assujettissement d'un autre équipement à un montant suivant l'invention ;
la figure 14 est une vue partie en élévation de bout et partie en coupe transversale de l'ensemble, suivant la ligne XIV-XIV de la figure 13;
la figure 15 est une vue partielle en perspective de deux autres équipements montés superposés l'un à la suite de l'autre.

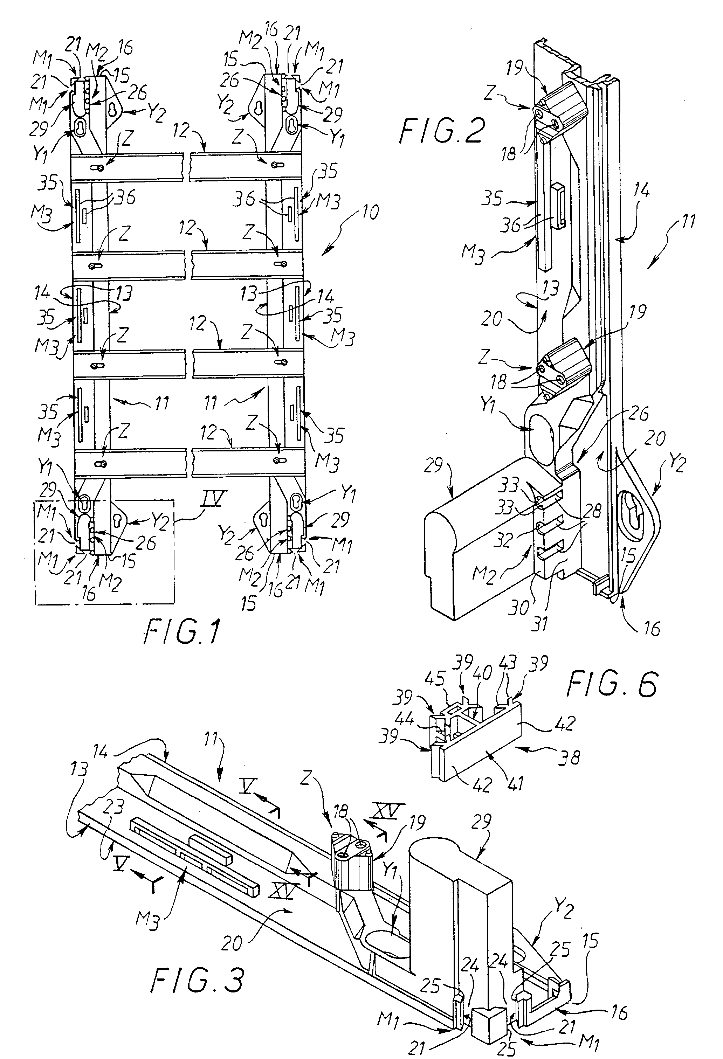

Sur la figure 1, on reconnaît un châssis de support 10 du type de ceux couramment mis en oeuvre pour le support d'appareils électriques modulaires, non représentés.

De manière connue en soi, ce châssis de support 10 comporte, à la manière d'une échelle, deux montants 11 et au moins une traverse 12.

A titre d'exemple, quatre traverses 12 sont prévues dans la forme de réalisation représentée, et elles sont établies à un pas régulier.

De manière connue en soi, également, les montants 11, qui sont globalement rectilignes, sont parallèles entre eux, et les traverses 12, qui sont elles-mêmes globalement rectilignes, leur sont perpendiculaires.

Ces traverses 12 étant bien connues par elles-mêmes, et ne relevant pas de la présente invention, elles ne seront pas décrites ici.

Les montants 11 ne seront pas non plus décrits dans tous leurs détails ici.

Seuls en seront décrits les éléments nécessaires à la compréhension de l'invention.

En pratique, les deux montants 11 mis en oeuvre sont identiques l'un à l'autre, et ils interviennent de manière symétrique l'un par rapport à l'autre, par simple retournement de 180° dans leur plan.

Ils présentent chacun deux bords longitudinaux 13, 14, l'un extérieur, l'autre intérieur, et deux bords transversaux 15, suivant un contour en plan qui, dans la forme de réalisation représentée, est globalement rectangulaire.

Entre leurs extrémités 16, les montants 11 comportent, chacun, à distance l'une de l'autre, au moins deux zones de fixation de traverse Z, par chacune desquelles ils sont adaptés à recevoir une traverse 12.

Ces zones de fixation de traverse Z sont au nombre de quatre pour chacun des montants 11 dans la forme de réalisation représentée.

En outre, dans cette forme de réalisation, l'une au moins de ces zones de fixation de traverse Z, et, en pratique, chacune de celles-ci, comporte, alignés l'un avec l'autre suivant une transversale par rapport à la direction d'allongement des montants 11, deux perçages 18, et ceux-ci interviennent au sommet d'un plot 19 qui fait saillie sur la face avant 20 de ces montants 11.

Au voisinage de chacune de leurs extrémités 16, les montants 11 comportent également chacun au moins une zone de fixation Y₁, Y₂ propre à leur propre fixation à un quelconque support, non représenté.

Dans la forme de réalisation représentée, deux zones de fixation Y₁, Y₂ sont prévues au voisinage de chacune des extrémités 16.

La zone de fixation Y₁ intervient en pleine surface, tandis que la zone de fixation Y₂ se présente sous la forme d'une oreille qui fait saillie vers l'intérieur sur le bord longitudinal 14 intérieur.

Pour l'essentiel, chacune de ces zones de fixation Y₁, Y₂ comporte un trou en forme de boutonnière, ou de trou de serrure.

Suivant l'invention, chacun des montants 11 comporte, en outre, localement, indépendamment des zones de fixation de traverse Z, et à distance de celles-ci, au moins un moyen de fixation apte à lui permettre de recevoir, frontalement, par simple engagement, et sans un quelconque autre accessoire, suivant des modalités décrites plus en détail ultérieurement, un quelconque autre équipement.

Dans la forme de réalisation représentée, chacun des montants 11 comporte, en creux, sur sa tranche, à l'une au moins de ses extrémités 16, sur son bord transversal 15 correspondant, à titre de moyen de fixation M₁, et pour recevoir un quelconque équipement, au moins une encoche en queue d'aronde 21.

Préférentiellement, et cela est le cas dans la forme de réalisation représentée, chacun des montants 11 comporte, à chacune de ses extrémités 16, sur le bord transversal 15 correspondant, au moins une encoche en queue d'aronde 21.

Par exemple, et tel que représenté, seule une telle encoche en queue d'aronde 21 est prévue sur un tel bord transversal 15.

Conjointement, dans la forme de réalisation représentée, chacun des montants 11 comporte, en creux, sur sa tranche, sur son bord longitudinal 13 extérieur, à titre de moyen de fixation M₁, et pour recevoir un quelconque équipement, au moins une encoche en queue d'aronde 21 du même type que la précédente.

Préférentiellement, l'encoche en queue d'aronde 21 qu'un montant 11 présente ainsi sur son bord longitudinal 13 extérieur s'étend à proximité de l'une de ses extrémités 16.

Par exemple, et tel que représenté, chacun des montants 11 comporte une encoche en queue d'aronde 21 sur son bord longitudinal 13 extérieur à proximité de chacune de ses extrémités 16.

Préférentiellement, et cela est le cas dans les formes de réalisation représentées, les encoches en queue d'aronde 21 que chacun des montants 11 présente ainsi sur ses bords 13, 15, qu'il s'agisse de son bord longitudinal 13 extérieur ou qu'il s'agisse de ses bords transversaux 15, s'étendent sur toute son épaisseur, en débouchant donc tant sur sa face arrière 23 que sur sa face avant 20, et elles ont, en plan, un profil en trapèze, avec un fond 24 plan et des flancs latéraux 25 également plans.

Dans la forme de réalisation représentée, chacun des montants 11 comporte, également, à distance de sa tranche, sur un bossage d'emboîtement 26 qui fait saillie sur sa face avant 20, à titre de moyen de fixation M₂, et pour recevoir un quelconque équipement, au moins un élément 28, qui est globalement en queue d'aronde, et qui, par commodité, sera donc appelé ici élément de queue d'aronde 28.

Par exemple, et tel que représenté, le bossage d'emboîtement 26 est adossé à un pilier 29, et chacun des montants 11 comporte un tel bossage d'emboîtement 26 ainsi adossé à un pilier 29 au voisinage de chacune de ses extrémités 16.

Le pilier 29 ne relevant pas de la présente invention, il ne sera pas décrit ici.

Son contour a d'ailleurs été volontairement simplifié sur les figures.

Préférentiellement, chacun des bossages d'emboîtement 26 présente, parallèlement les uns aux autres, plusieurs éléments de queue d'aronde 28.

Par exemple, et tel que représenté, ces éléments de queue d'aronde 28 sont au nombre de trois.

Dans la forme de réalisation représentée, chacun des éléments de queue d'aronde 28 que présente ainsi un bossage d'emboîtement 26 est une encoche, qui, à compter de la face avant 30 de ce bossage d'emboîtement 26, s'étend en creux sur une face latérale 31 de celui-ci, sur une partie au moins de la hauteur de ce bossage d'emboîtement 26.

Par exemple, et tel que représenté, la face latérale 31 concernée des bossages d'emboîtement 26 est leur face opposée à celle par laquelle ils sont adossés à un pilier 29, et il s'agit, en pratique, d'une face longitudinale qui, parallèle aux bords longitudinaux 13, 14 des montants 11, est tournée vers le bord longitudinal 14 intérieur de ceux-ci.

Dans la forme de réalisation représentée, les éléments de queue d'aronde 28 ne s'étendent que sur une partie de la hauteur des bossages d'emboîtement 26, et les encoches qui les forment ont chacune en plan un contour curviligne, avec un fond 32 plan et des flancs latéraux 33 concaves.

Dans la forme de réalisation représentée, enfin, chacun des montants 11 comporte, localement, en saillie sur sa face avant 20, à titre de moyen de fixation M₃, et pour recevoir un quelconque équipement, au moins un rail d'encliquetage 35 présentant, à distance l'un de l'autre, parallèlement à cette face avant 20, deux retours en équerre 36.

Préférentiellement, et cela est le cas dans la forme de réalisation représentée, pour chaque paire de zones de fixation de traverse Z successives, chacun des montants 11 comporte un rail d'encliquetage 35 entre les deux zones de fixation de traverse Z d'une telle paire.

Chacun des montants 11 comporte, donc, dans la forme de réalisation représentée, trois rails d'encliquetage 35, qui alternent avec les zones de fixation de traverse Z, et qui, le long d'un tel montant 11, sont globalement alignés les uns avec les autres.

Dans la forme de réalisation représentée, les rails d'encliquetage 35 s'étendent parallèlement aux bords longitudinaux 13, 14 des montants 11, et, pour chacun d'eux, les retours en équerre 36 s'étendent dos à dos.

En outre, dans cette forme de réalisation, ces retours en équerre 36 sont de longueurs inégales, celui qui est le plus proche du bord longitudinal 13 extérieur des montants 11 étant de longueur largement supérieure à celle de l'autre.

Cela étant, il est associé, à titre d'équipement, à un quelconque au moins des montants 11 suivant l'invention, une entretoise de jumelage 38 présentant, en saillie, à distance l'un de l'autre, au moins deux bossages en queue d'aronde 39 de contour complémentaire de celui de sa ou de ses propres encoches en queue d'aronde 21.

Dans la forme de réalisation représentée, figures 6 à 8, cette entretoise de jumelage 38 a globalement une configuration en T, avec un jambage 40 et une traverse 41.

Le jambage 40 présente, en saillie, dos à dos, à distance de la traverse 41, et, par exemple, à son extrémité libre, tel que représenté, deux bossages en queue d'aronde 39.

Conjointement, la traverse 41 présente, sur chacun de ses bras 42, en saillie sur la face d'un tel bras 42 tournée vers le jambage 40, à distance de ce jambage 40, et, par exemple, à l'extrémité libre de ce bras 42, tel que représenté, un bossage en queue d'aronde 39.

Dans la forme de réalisation représentée, le jambage 40 et la traverse 41 se présentent l'un et l'autre sous la forme de barrettes plates de contour rectangulaire ayant l'une et l'autre une même largeur, et chacun des bossages en queue d'aronde 39 est formé de deux ailes 43, qui, disposées en dièdre, divergent l'une par rapport à l'autre, en étant reliées intérieurement l'une à l'autre par une nervure triangulaire de rigidification 44 dans leur zone médiane.

En outre, dans la forme de réalisation représentée, l'entretoise de jumelage 38 présente, à l'extrémité libre de son jambage 40, une structure en caisson 45, de section transversale rectangulaire, et c'est à compter de celle-ci que s'étendent dos à dos les bossages en queue d'aronde 39 correspondants.

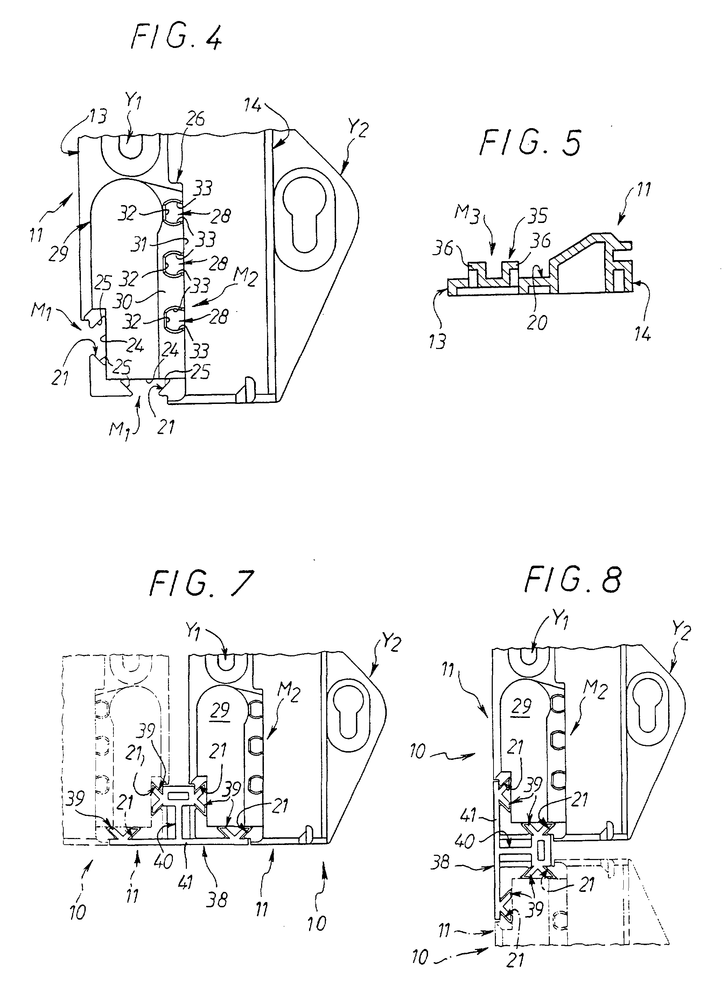

Tel qu'illustré en traits interrompus sur les figures 7 et 8, une telle entretoise de jumelage 38 permet, à la demande, de coupler un montant 11, soit avec un autre montant 11 disposé côte à côte, figure 7, pour un jumelage horizontal de deux châssis de support 10, soit avec un autre montant 11 disposé bout à bout, figure 8, pour un jumelage vertical de ces deux châssis de support 10.

Dans l'un et l'autre cas, la mise en place de l'entretoise de jumelage 38 se fait avantageusement frontalement, par simple engagement de ses bossages en queue d'aronde 39 dans les encoches en queue d'aronde 21 que présentent les montants 11 à coupler.

Dans l'un et l'autre cas, également, l'entretoise de jumelage 38 est en prise avec chacun des montants 11 par deux bossages en queue d'aronde 39, l'un à partir de son jambage 40, l'autre à partir de sa traverse 41.

Le jumelage assuré est ainsi particulièrement ferme et sûr.

Dans ce qui précède, il a été supposé que l'entretoise de jumelage 38 formait, par elle-même, une pièce distincte.

Mais il peut également être associé, à l'un au moins des montants 11, un équipement dont est solidaire au moins une telle entretoise de jumelage 38.

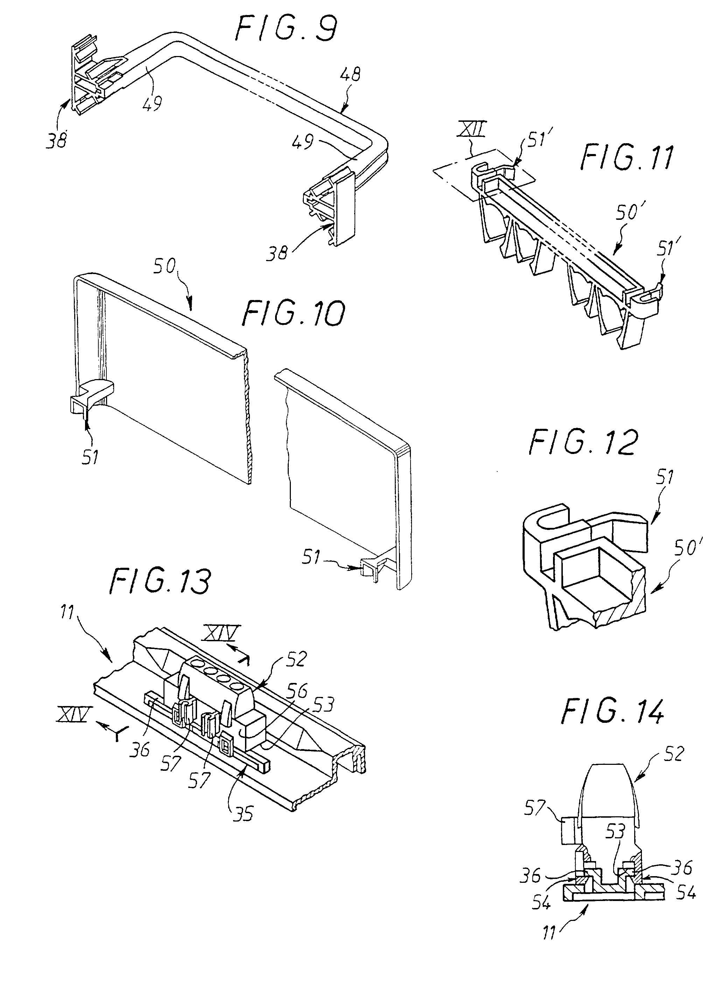

Par exemple, figure 9, il est associé, à un tel montant 11, un équipement 48, en forme d'anse, qui, de manière connue en soi, est destiné à s'étendre d'un des montants 11 à l'autre, pour former un pont de passage de câbles, et dont chacun des jambages 49 est équipé, suivant l'invention, d'une entretoise de jumelage 38 du type de celle précédemment décrite.

En pratique, cette entretoise de jumelage 38 intervient à l'extrémité libre d'un tel jambage 49, transversalement par rapport à celui-ci.

Préférentiellement, les deux entretoises de jumelage 38 dont est ainsi équipé l'équipement 48 sont d'un seul tenant avec celui-ci, l'ensemble formant, par moulage, une seule et même pièce.

En variante, figures 10 à 12, il est associé, plus généralement, à l'un au moins des montants 11, un quelconque équipement 50, 50' comportant, en saillie, au moins un bossage queue d'aronde 51, 51' propre à coopérer en engagement avec l'une quelconque de ses encoches en queue d'aronde 21.

Par exemple, et tel que représenté, ces équipements 50, 50' sont destinés à s'étendre de l'un à l'autre des montants 11, comme l'équipement 48 précédent.

Ils comportent donc, chacun, en saillie, à distance l'un de l'autre, deux bossages queue d'aronde 51, 51'.

Par exemple figure 10, l'équipement 50 est une plaque d'ajour et le contour de chacun des deux bossages queue d'aronde 51 que comporte cet équipement 50 est globalement complémentaire de celui des encoches en queue d'aronde 21 des montants 11, à la manière des bossages en queue d'aronde 39 de l'entretoise de jumelage 38.

En variante, figures 11 et 12, dans l'équipement 50', ici une barrette de fixation de tubes, les contours des deux bossages queue d'aronde 51' sont chacun respectivement complémentaires pour moitié de celui des encoches en queue d'aronde 21 des montants 11, en étant en outre complémentaires l'un de l'autre.

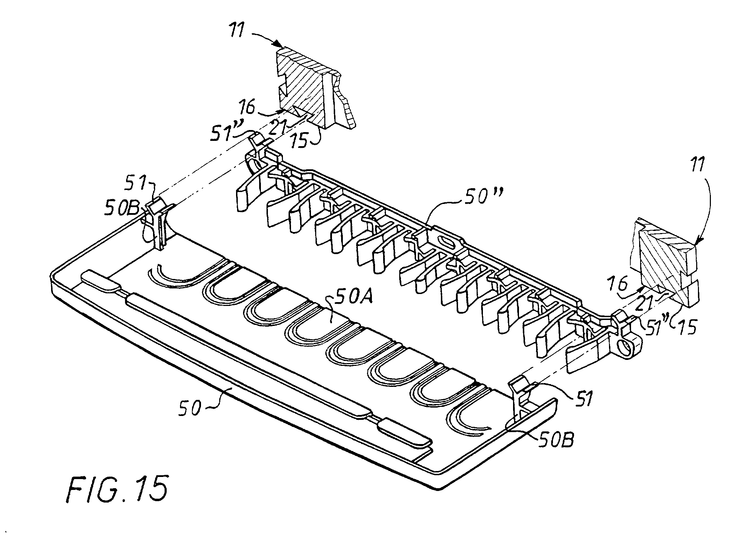

Selon une autre variante illustrée figure 15, il est monté, à la suite d'un premier équipement 50" associé à des montants 11, au moins un autre équipement 50 associé aux mêmes montants. Le premier équipement 50", ici barrette de fixation de tubes, et un second équipement 50, ici plaque d'ajour, sont montés superposés comme indiqué. Les bossages queue d'aronde 51" de l'équipement 50" sont montés dans les encoches 21 des bords transversaux 15, puis les bossages queue d'aronde 51 de l'équipement 50 sont montés à la suite sur les bossages queue d'aronde 51" dans ces mêmes encoches. Les bossages queue d'aronde 51 du second équipement 50 coopèrent donc avec les mêmes encoches 21 que celles où sont déjà emboîtés les bossages queue d'aronde 51" du premier équipement 50".

Dans l'exemple représenté, quand les équipements 50" et 50 sont montés superposés, l'équipement 50" est pris en sandwich entre les montants et l'équipement 50. Les bossages 51 de l'équipement 50 sont formés en bout de tiges entretoises 50B de longueur au moins égale à l'épaisseur de l'équipement 50" et trouvent appui par complémentarité de forme sur ce dernier.

Dans cet exemple de montage des équipements 50" et 50, des tubes peuvent être introduits à travers l'équipement 50 par des ouvertures 50A défonçables et maintenus par des griffes de l'équipement 50" dès leur introduction dans le coffret.

Comme illustré aux figures 13 et 14, il est associé, à l'un au moins des montants 11, au moins un équipement 52 comportant, sur sa face inférieure 53, des moyens d'encliquetage 54, en l'espèce en forme de crochets, par lesquels il est apte à être rapporté, par encliquetage, sur l'un ou l'autre des rails d'encliquetage 35 que comporte un tel montant 11.

Par exemple, et tel que représenté, cet équipement 52 est un bornier.

Dans la forme de réalisation représentée, un tel bornier comporte, en outre, sur l'une de ses faces latérales 56, au moins un élément de queue d'aronde 57, dont la section transversale est complémentaire de celle des éléments de queue d'aronde 28 que présentent les bossages d'emboîtement 26 des montants 11, et par lequel il est ainsi apte à venir en prise avec l'un quelconque de ces bossages d'emboîtement 26, par simple engagement frontal.

Par exemple, et tel que représenté, l'équipement 52 présente, parallèlement l'un à l'autre, deux éléments de queue d'aronde 57, et il s'agit de colonnettes qui font saillie sur sa face latérale 56 concernée.

Par exemple, et tel que représenté, ces colonnettes sont creuses et leur section transversale est ouverte.

Un tel équipement 52 ainsi agencé peut donc se monter au choix soit sur les rails d'encliquetage 35, soit sur un bossage d'emboîtement 26.

Bien entendu, la présente invention ne se limite pas à la forme de réalisation décrite et représentée, mais englobe toute variante d'exécution dans le cadre des revendications.

## Revendications

1. Montant pour châssis de support, notamment pour appareillage électrique, du genre comportant, à distance l'une de l'autre, au moins deux zones de fixation de traverse (Z) par chacune desquelles il est adapté à recevoir une traverse (12), comportant indépendamment des zones de fixation de traverse (Z), et à distance de celle-ci, au moins un moyen de fixation du genre queue d'aronde apte à lui permettre de recevoir, frontalement, un quelconque autre équipement, caractérisé en ce qu'il comporte, débouchant en creux sur sa tranche, à l'une au moins de ses extrémités (16), au moins une encoche en queue d'aronde (21).

2. Montant suivant la revendication 1, caractérisé en ce qu'il comporte, à chacune de ses extrémités (16), sur le bord transversal (15) correspondant, au moins une encoche en queue d'aronde (21).

3. Montant suivant l'une quelconque des revendications 1 à 2, caractérisé en ce que, pour recevoir un quelconque équipement, il comporte, en creux sur sa tranche, sur son bord longitudinal (13) extérieur, au moins une encoche en queue d'aronde (21).

4. Montant suivant la revendication 3, caractérisé en ce que l'encoche en queue d'aronde (21) qu'il présente sur son bord longitudinal (13) extérieur s'étend à proximité de l'une de ses extrémités (16).

5. Montant suivant la revendication 4, caractérisé en ce qu'il comporte une encoche en queue d'aronde (21) sur son bord longitudinal (13) extérieur à proximité de chacune de ses extrémités (16).

6. Montant suivant l'une quelconque des revendications 2 à 5, caractérisé en ce que la ou les encoches en queue d'aronde (21) qu'il présente sur un bord (13, 15) s'étendent sur toute son épaisseur.

7. Montant suivant l'une quelconque des revendications 2 à 6, caractérisé en qu'il lui est associé, à titre d'équipement, une entretoise de jumelage (38) présentant, en saillie, à distance l'un de l'autre, au moins deux bossages en queue d'aronde (39) de contour complémentaire de celui de sa ou de ses propres encoches en queue d'aronde (21).

8. Montant suivant la revendication 7, caractérisé en ce que l'entretoise de jumelage (38) qui lui est associée a globalement une configuration en T, avec un jambage (40) et une traverse (41), le jambage (40) présentant, en saillie, dos à dos, à distance de la traverse (41), deux bossages en queue d'aronde (39), et la traverse (41) présentant, sur chacun de ses bras (42), en saillie sur la face d'un tel bras (42) tournée vers le jambage (40), à distance de ce jambage (40), un bossage en queue d'aronde (39).

9. Montant suivant l'une quelconque des revendications 7, 8, caractérisé en ce qu'il lui est associé un équipement (48) dont est solidaire au moins une entretoise de jumelage (38).

10. Montant suivant la revendication 9, caractérisé en ce qu'il lui est associé un équipement (48), en forme d'anse, dont chacun des jambages (49) est équipé d'une entretoise de jumelage (38).

11. Montant suivant l'une quelconque des revendications 2 à 6, caractérisé en ce qu'il lui est associé un équipement (50, 50', 50") qui comporte, en saillie, au moins un bossage queue d'aronde (51, 51', 51'') propre à coopérer en engagement avec l'une quelconque de ses encoches en queue d'aronde (21).

12. Montant suivant la revendication 11, caractérisé en ce qu'il lui est associé un équipement (50, 50', 50") comportant, en saillie, à distance l'un de l'autre, deux bossages queue d'atronde (51, 51', 51'').

13. Montant suivant la revendication 12, caractérisé en ce qu'il lui est associé un équipement (50') dont les bossages queue d'aronde (51') ont des contours qui, complémentaires l'un de l'autre, sont chacun respectivement complémentaires pour moitié de celui d'une encoche en queue d'aronde (21).

14. Montant suivant l'une quelconque des revendications 11 à 13, caractérisé en ce que plusieurs équipements sont associés à une même encoche en queue d'aronde (21) avec des bossages queue d'aronde respectifs adaptés à être introduits successivement dans la même encoche (21).

15. Montant suivant la revendication 14, caractérisé en ce que plusieurs équipements (50, 50") sont associés à au moins un jeu d'au moins deux encoches en queue d'aronde (21) avec des jeux correspondants de bossages queue d'aronde (51, 51") respectivement adaptés aux dites encoches (21).

16. Montant suivant la revendication 1, caractérisé en ce que, pour recevoir un quelconque équipement, il comporte, à distance de sa tranche, sur un bossage d'emboîtement (26) qui fait saillie sur sa face avant (20), au moins un élément de queue d'aronde (28).

17. Montant suivant la revendication 16, caractérisé en ce que l'élément de queue d'aronde (28) qu'il présente sur son bossage d'emboîtement (26) est une encoche, qui, à compter de la face avant (30) de ce bossage d'emboîtement (26), s'étend en creux sur une face latérale (31) de celui-ci, sur une partie au moins de la hauteur de ce bossage d'emboîtement (26).

18. Montant suivant l'une quelconque des revendications 16, 17, caractérisé en ce que le bossage d'emboîtement (26) qu'il comporte présente, parallèlement les uns aux autres, plusieurs éléments de queue d'aronde (28).

19. Montant suivant l'une quelconque des revendications 16 à 18, caractérisé en ce qu'il comporte un bossage d'emboîtement (26) au voisinage de chacune de ses extrémités (16).

20. Montant suivant la revendication 1, caractérisé en ce que, pour recevoir un quelconque équipement, il comporte, en outre, localement, en saillie sur sa face avant (20), au moins un rail d'encliquetage (35) présentant, parallèlement à cette face avant (20), deux retours en équerre (36).

21. Montant suivant la revendication 20, caractérisé en ce que les retours en équerre (36) du rail d'encliquetage (35) s'étendent dos à dos.

22. Montant suivant l'une quelconque des revendications 20, 21, caractérisé en ce que le rail d'encliquetage (35) s'étend parallèlement à ses bords longitudinaux (13, 14).

23. Montant suivant l'une quelconque des revendications 20 à 22, caractérisé en ce que, pour chaque paire de zones de fixation de traverse (Z) successives, il comporte un rail d'encliquetage (35) entre les deux zones de fixation de traverse (Z) d'une telle paire.

24. Châssis de support, notamment pour appareillage électrique, caractérisé en ce qu'il comprend au moins deux montants selon l'une quelconque des revendications précédentes.

## Claims

1. An upright for a support chassis, in particular for an item of electrical equipment, of the kind comprising, at a spacing from each other, at least two crossbar-fixing zones (Z), by way of each of which it is adapted to receive a crossbar (12), comprising independently of the crossbar-fixing zones (Z) and at a spacing therefrom at least one fixing means of the dovetail type capable of permitting it to receive in frontal relationship any other fitting, characterised in that at one at least of its ends (16) and opening in recessed relationship at its edge face it comprises at least one dovetail-shaped notch (21).

2. An upright according to claim 1 characterised in that at each of its ends (16) on the corresponding transverse edge (15) it comprises at least one dovetail-shaped notch (21).

3. An upright according to any one of claims 1 and 2 characterised in that, to receive any fitting, it comprises at least one dovetail-shaped notch (21) in recessed relationship on its edge face, on its outside longitudinal edge (13).

4. An upright according to claim 3 characterised in that the dovetail-shaped notch (21) that it has on its outside longitudinal edge (13) extends in the proximity of one of its ends (16).

5. An upright according to claim 4 characterised in that it comprises a dovetail-shaped notch (21) on its outside longitudinal edge (13) in the proximity of each of its ends (16).

6. An upright according to any one of claims 2 to 5 characterised in that the dovetail-shaped notch or notches (21) that it has on an edge (13, 15) extend over its entire thickness.

7. An upright according to any one of claims 2 to 6 characterised in that associated therewith as a fitting is a pairing strut (38) which comprises in projecting relationship at a spacing from each other at least two dovetail-shaped bosses (39) of complementary contour to that of its own dovetail-shaped notch or notches (21).

8. An upright according to claim 7 characterised in that the pairing strut (38) which is associated therewith is generally of a T-shaped configuration with a leg portion (40) and a crossbar (41), the leg portion (40) comprising in projecting relationship and back-to-back at a spacing from the crossbar (41) two dovetail-shaped bosses (39), and the crossbar (41) having on each of its arms (42) in projecting relationship on the face of such an arm (42) which faces towards the leg portion (40) at a spacing from said leg portion (40) a dovetail-shaped boss (39).

9. An upright according to either one of claims 7 and 8 characterised in that associated therewith is a fitting (48), with respect to which at least one pairing strut (38) is fixed.

10. An upright according to claim 9 characterised in that associated therewith is a fitting (48) in the form of a loop, each of the leg portions (49) of which is equipped with a pairing strut (38).

11. An upright according to any one of claims 1 to 6 characterised in that associated therewith is a fitting (50, 50', 50") which comprises in projecting relationship at least one dovetail-shaped boss (51, 51', 51") cooperable in engaging relationship with any one of its dovetail-shaped notches (21).

12. An upright according to claim 11 characterised in that associated therewith is a fitting (50, 50', 50") comprising in projecting relationship at a spacing from each other two dovetail-shaped bosses (51, 51', 51").

13. An upright according to claim 12 characterised in that associated therewith is a fitting (50') whose dovetail-shaped bosses (51') are of contours which, being complementary to each other, are each respectively complementary in relation to half of that of a dovetail-shaped notch (21).

14. An upright according to any one of claims 11 to 13 characterised in that a plurality of fittings are associated with the same dovetail-shaped notch (21) with respective dovetail-shaped bosses adapted to be successively introduced into the same notch (21).

15. An upright according to claim 14 characterised in that a plurality of fittings (50, 50") are associated with at least one set of at least two dovetail-shaped notches (21) with corresponding sets of dovetail-shaped bosses (51, 51") which are respectively adapted to said notches (21).

16. An upright according to claim 1 characterised in that, to receive any fitting, it comprises at a spacing from its edge face on an engagement boss (26) which projects on its front face (20) at least one dovetail-shaped element (28).

17. An upright according to claim 16 characterised in that the dovetail-shaped element (28) which it has on its engagement boss (26) is a notch which, from the front face (30) of said engagement boss (26), extends in recessed relationship in a lateral face (31) thereof, over a part at least of the height of said engagement boss (26).

18. An upright according to either one of claims 16 and 17 characterised in that the engagement boss (26) that it comprises has a plurality of dovetail-shaped elements (28) in mutually parallel relationship.

19. An upright according to any one of claims 16 to 18 characterised in that it comprises an engagement boss (26) in the vicinity of each of its ends (16).

20. An upright according to claim 1 characterised in that, to receive any fitting, it further comprises locally in projecting relationship on its front face (20) at least one latching rail (35) which has two right-angled flange portions (36) in parallel relationship with said front face (20).

21. An upright according to claim 20 characterised in that the right-angled flange portions (36) of the latching rail (35) extend back-to-back.

22. An upright according to either one of claims 20 and 21 characterised in that the latching rail (35) extends parallel to its longitudinal edges (13, 14).

23. An upright according to any one of claims 20 to 22 characterised in that, for each pair of successive crossbar-fixing zones (Z), it comprises a latching rail (35) between the two crossbar-fixing zones (Z) of such a pair.

24. A support chassis, in particular for an item of electrical equipment, characterised in that it comprises at least two uprights according to any one of the preceding claims.

## Patentansprüche

1. Säule für Traggestell insbesondere für elektrische Geräte, die in einem Abstand voneinander mindestens zwei Querträgerbefestigungsbereiche (Z) aufweist, mit deren jedem sie dafür ausgelegt ist, einen Querträger (Z) aufzunehmen, und unabhängig von den Querträgerbefestiguhgsbereichen (Z) und in einem Abstand von diesen mindestens ein schwalbenschwanzförmiges Befestigungsmittel aufweist, das ihr gestattet, frontseitig eine beliebige andere Ausrüstung aufzunehmen, dadurch gekennzeichnet, dass sie an mindestens einem ihrer Enden (16) mindestens eine auf ihrer Kante ausmündende schwalbenschwanzförmige Aussparung (21) aufweist.

2. Säule nach Anspruch 1, dadurch gekennzeichnet, dass sie an jedem ihrer Enden (16) auf dem entsprechenden Querrand (15) mindestens eine schwalbenschwanzförmige Aussparung (21) aufweist.

3. Säule nach einem der Ansprüche 1 bis 2, dadurch gekennzeichnet, dass sie auf ihrer Kante auf ihrem äußeren Längsrand (13) zur Aufnahme einer beliebigen Ausrüstung mindestens eine schwalbenschwanzförmige Aussparung (21) aufweist.

4. Säule nach Anspruch 3, dadurch gekennzeichnet, dass die schwalbenschwanzförmige Aussparung (21), die sie auf ihrem äußeren Längsrand (13) aufweist, sich in Nähe eines ihrer Enden (16) erstreckt.

5. Säule nach Anspruch 4, dadurch gekennzeichnet, dass sie in Nähe jedes ihrer Enden (16) auf ihrem äußeren.Längsrand (13) eine schwalbenschwanzförmige Aussparung (21) aufweist.

6. Säule nach einem der Ansprüche 2 bis 5, dadurch gekennzeichnet, dass die schwalbenschwanzförmige Aussparung oder die schwalbenschwanzförmigen Ausparungen (21), die sie auf einem Rand (13, 15) aufweist, sich über ihre ganze Dicke erstrecken.

7. Säule nach einem der Ansprüche 2 bis 6, dadurch gekennzeichnet, dass ihr als Ausrüstung ein Kopplungsstück (38) zugeordnet ist, das in einem Abstand voneinander vorstehend mindestens zwei schwalbenschwanzförmige Erhebungen (39) aufweist, deren Umriss zu dem der schwalbenschwanzförmigen Aussparung oder Ausparungen (21) der Säule ergänzend ist.

8. Säule nach Anspruch 7, dadurch gekennzeichnet, dass das ihr zugeordnete Kopplungsstück (38) global eine T-Form mit einem Steg (40) und einem Querelement (41) besitzt, wobei der Steg (40) Rücken an Rücken vorstehend in einem Abstand von dem Querelement (41) zwei schwalbenschwanzförmige Erhebungen (39) aufweist und das Querelement (41) auf jedem seiner Arme (42) auf der dem Steg (40) zugewandten Seite eines solchen Arms (42) vorstehend in einem Abstand von diesem Steg (40) eine schwalbenschwanzförmige Erhebung (39) aufweist.

9. Säule nach einem der Ansprüche 7, 8, dadurch gekennzeichnet, dass ihr eine Ausrüstung (48) zugeordnet ist, mit der mindestens ein Kopplungsstück (38) fest verbunden ist.

10. Säule nach Anspruch 9, dadurch gekennzeichnet, dass ihr eine bügelförmige Ausrüstung (48) zugeordnet ist, deren Seitenschenkel (49) jeweils mit einem Kopplungsstück (38) ausgerüstet sind.

11. Säule nach einem der Ansprüche 2 bis 6, dadurch gekennzeichnet, dass ihr eine Ausrüstung (50, 50', 50") zugeordnet ist, die vorstehend mindestens eine schwalbenschwanzförmige Erhebung (51, 51', 51") aufweist, die geeignet ist, ineinandergreifend mit einer beliebigen der schwalbenschwanzförmigen Aussparungen (21) der Säule zusammenzuwirken.

12. Säule nach Anspruch 11, dadurch gekennzeichnet, dass ihr eine Ausrüstung (50, 50', 50") zugeordnet ist, die in einem Abstand voneinander vorstehend zwei schwalbenschwanzförmige Erhebungen (51, 51', 51") aufweist.

13. Säule nach Anspruch 12, dadurch gekennzeichnet, dass ihr eine Ausrüstung (50') zugeordnet ist, deren schwalbenschwanzförmige Erhebungen (51') Umrisse besitzen, die einander ergänzen und die jeweils zur Hälfte zu dem einer schwalbenschwanzförmigen Aussparung (21) ergänzend sind.

14. Säule nach einem der Ansprüche 11 bis 13, dadurch gekennzeichnet, dass ein und derselben schwalbenschwanzförmigen Aussparung (21) mehrere Ausrüstungen jeweils mit schwalbenschwanzförmigen Erhebungen zugeordnet sind, die dafür ausgelegt sind, nacheinander in dieselbe Aussparung (21) eingeführt zu werden.

15. Säule nach Anspruch 14, dadurch gekennzeichnet, dass mindestens einem Satz von mindestens zwei schwalbenschwanzförmigen Aussparungen (21) mehrere Ausrüstungen (50, 50") mit entsprechenden Sätzen von an diese Aussparungen (21) angepassten schwalbenschwanzförmigen Erhebungen (51, 51") zugeordnet sind.

16. Säule nach Anspruch 1, dadurch gekennzeichnet, dass sie zur Aufnahme einer beliebigen Ausrüstung in einem Abstand von ihrer Kante auf einer auf ihrer Vorderseite (20) vorstehenden Einsteckerhebung (26) mindestens ein schwalbenschwanzförmiges Element (28) aufweist.

17. Säule nach Anspruch 16, dadurch gekennzeichnet, dass das schwalbenschwanzförmige Element (28), das sie auf ihrer Einsteckerhebung (26) aufweist, eine Aussparung ist, die sich von der Vorderseite (30) dieser Einsteckerhebung (26) aus auf deren Seitenfläche (31) über mindestens einen Teil der Höhe dieser Einsteckerhebung (26) erstreckt.

18. Säule nach einem der Ansprüche 16, 17, dadurch gekennzeichnet, dass die Einsteckerhebung (26), die sie aufweist, parallel zueinander mehrere schwalbenschwanzförmige Elemente (28) aufweist.

19. Säule nach einem der Ansprüche 16 bis 18, dadurch gekennzeichnet, dass sie eine Einsteckerhebung (26) in Nähe jedes ihrer Enden (16) aufweist.

20. Säule nach Anspruch 1, dadurch gekennzeichnet, dass sie zur Aufnahme einer beliebigen Ausrüstung außerdem örtlich auf ihrer Vorderseite (20) vorstehend mindestens eine Einrastschiene (35) aufweist, die parallel zu dieser Vorderseite (20) zwei rechtwinklige Abwinklungen (36) besitzt.

21. Säule nach Anspruch 20, dadurch gekennzeichnet, dass die rechtwinkligen Abwinklungen (36) der Einrastschiene (35) sich Rücken an Rücken erstrecken.

22. Säule nach einem der Ansprüche 20, 21, dadurch gekennzeichnet, dass die Einrastschiene (35) sich parallel zu ihren Längsrändern (13, 14) erstreckt.

23. Säule nach einem der Ansprüche 20 bis 22, dadurch gekennzeichnet, dass sie für jedes Paar von Querträgerbefestigungsbereichen (Z) zwischen den Querträgerbefestigungsbereichen (Z) eines solchen Paars eine Einrastschiene (35) aufweist.

24. Traggestell insbesondere für elektrische Geräte, dadurch gekennzeichnet, dass es mindestens zwei Säulen nach einem der vorhergehenden Ansprüche umfasst.
